# EUROPEAN PATENT SPECIFICATION

(11) **EP 3 104 031 B1**
(45) Date of publication and mention of the grant of the patent: **07.08.2019**
(21) Application number: 15171524.0
(22) Date of filing: 10.06.2015
(51) Int. Cl.: F16C 43/02, F16C 17/10, F16C 33/04

(54) **SLIDING ELEMENT COMPRISING A FLEXIBLE ADHESIVE**
GLEITELEMENT MIT EINEM FLEXIBLEN KLEBSTOFF
ÉLÉMENT COULISSANT COMPRENANT UN ADHÉSIF FLEXIBLE

(43) Date of publication of application: 14.12.2016
(73) Proprietor: MAHLE International GmbH, 70376 Stuttgart (DE); MAHLE Engine Systems UK Limited, Central Park Rugby Warwickshire CV23 0WE (GB); Mahle Composants Moteur France SAS, 74650 Chavanod (FR)
(72) Inventor: Gorges, Roger, Birmingham, West Midlands B17 9AF (GB); Latham, David, Hitchin, Hertfordshire SG4 9JP (GB); Ring, Matthew, Southsea, Hampshire PO4 0BG (GB); Beaurepaire, Olivier, 74150 Rumilly (FR)
(74) Representative: BRP Renaud & Partner mbB Rechtsanwälte Patentanwälte Steuerberater

(56) References cited:
- EP-A1- 2 163 857
- EP-A2- 0 133 145
- WO-A1-2013/068106
- WO-A2-2005/048680
- DE-A1- 3 730 165
- US-A1- 2012 315 169

## Description

This invention relates to a sliding element comprising a flexible adhesive and to a method of manufacturing the sliding element or a flanged half-bearing or bush comprising the sliding element.

Sliding elements according to preferred embodiments of the present invention are particularly suitable for use as flanged (or flange) bearings, flanged half-bearings and flanged bushes for use in automotive applications, for example in automotive engines (e.g. on crankshafts), transmissions, pumps and compressor systems.

In internal combustion engines, the bearing assemblies typically each comprise a pair of half-bearings retaining a crankshaft that is rotatable about an axis. For crankshaft journal bearing assemblies, at least one half-bearing may be a flanged half-bearing that comprises a hollow, generally semi-cylindrical, half-shell bearing provided with a generally semi-annular thrust washer extending outwardly (radially) at each axial end.

OEMs in the automotive sector, including engine and subassembly manufacturers, typically specify that an assembled flanged bearing is supplied as part of the main bearing set. This allows for ease of installation and keeps the thrust washer in place during the life of the engine. The assembled flanged bearing is expected to be rigid enough to cope with transportation and handling by operators and/or robots and to be flexible enough to accommodate machining tolerances in the engine and to permit installation, e.g. into the designated space in an engine block. The flanged bearing is typically required to be provided with some means for supporting torque loads of the engine without the thrust washers becoming detached and rotating relative to the half-shell bearing.

In some known flanged half-bearings, a single-piece construction of the half-shell bearing and thrust washers is used. In other known flanged half-bearings, the half-shell bearing and the thrust washer are loosely mechanically engaged with clip-like features. In a further type of flanged half-bearings the thrust washers are permanently assembled onto the half-shell bearing by deformation of corresponding engagement features.

Known clip-like features for loosely mechanically engaging a thrust washer around the outer surface of a half-shell bearing, at an axial end, have a generally semi-annular panel with a pair of hooking lugs (tabs) projecting inwardly from the semi-circular inner edge. The hooking lugs hook into corresponding openings in the half-shell bearing, in use, when the thrust washer is connected around the outer surface at an axial end of the half-shell bearing. The inwardly projecting hooking lugs are located to either side of the crown of the bearing, towards the joint faces, and are shaped to enable the thrust washer to be assembled onto the half-shell bearing when the half-shell bearing is resiliently or elastically deformed by pinching together the joint faces (circumferential end faces). The arrangement by which the hooking lugs engage with the openings (recesses) prevents separation once the half-shell bearing has returned to the relaxed position, and also prevents separation when the half-shell bearing has been slightly pinched together through being held in an interference fit with a housing, within the full bearing assembly. The hooking lugs typically have a uniform thickness and are machined to be thinner than the main semi-annular panel of the thrust washer, to enable the use of (axially) narrow openings in the half-shell bearing. One or more stabilisation lugs may be provided intermediate the hooking lugs, projecting inwardly from the inner edge of the semi-annular main panel, to reinforce the connection between the thrust washer and half-shell bearing, to prevent wear leading to substantial relative rotation of the thrust washer and half-shell bearing.

The prior art includes patent numbers US4533261, and EP2233759 which provide flanged half-bearings, in which thrust washers are loosely mechanically engaged with half-shell bearings using clip-like features comprising thin hooking lugs of uniform thickness receivable within openings in a corresponding half-shell bearing.

The prior art also includes PCT publication number WO2013/068106 which provides a flanged half-bearing (330) comprising at least one substantially semi-annular thrust washer (100A, 100B) with an internal periphery having lateral lugs (104A, 104B) and an Intermediary stabilisation lug (106) projecting from the Internal periphery (108) of the thrust washer, and a semi-cylindrical half journal half-shell bearing (220) having lateral recesses (226A, 226B) and an intermediary stabilisation recess (228) that are recessed into an axial end face (224A, 224B) of the half-shell bearing and are respectively connected to the lateral lugs and the stabilisation lug of the thrust washer, wherein the stabilisation lug (106) has rotational stabilisation edges (114) that project substantially perpendicularly from the inner periphery (108) of the thrust washer, and the stabilisation recess (228) is configured for axial relative movement of stabilisation lug; and an engine comprising at least one such flanged half-bearing (330).

The prior art also includes PCT publication number WO2015/007826 which provides a thrust washer (100) for a flanged half-bearing, the thrust washer comprising: a substantially semi-annular panel (102) having an inner edge (108) and outer edge; and hooking lugs (110) projecting inwardly from the inner edge of the panel, wherein the hooking lugs have latching edges (118) that are configured to engage within corresponding openings in a half-shell bearing received by the thrust washer and to prevent disconnection of the thrust washer and half-shell bearing without deformation of the half-shell bearing, each hooking lug has a hooking lug inner portion (104A) proximate, around the inner edge of the panel, to the central part of the thrust washer for engaging against edges of the openings in the half-shell bearing and a hooking lug outer portion (104B) remote, around the inner edge of the panel, from the central part of the thrust washer, and the hooking lug inner portion is thinner than the hooking lug outer portion.

The prior art also includes DE3730165 which provides a combined radial and axial sliding bearing of split or unsplit design which has at least one radial-bearing part and one axial-bearing part, which are connected to one another according to the preamble of claim 1. In order to obtain a simple and inexpensive aid to assembly which is, in particular, also suitable for use with robots, the connection between the radial-bearing part and the axial-bearing part is provided by at least one separate plastic connecting element and an optional adhesive joint can be provided between the connecting element and the bearing parts. Adhesive connection of components of sliding bearing assemblies are also known from US 2012/0315169, EP0133145 or WO2005/048680.

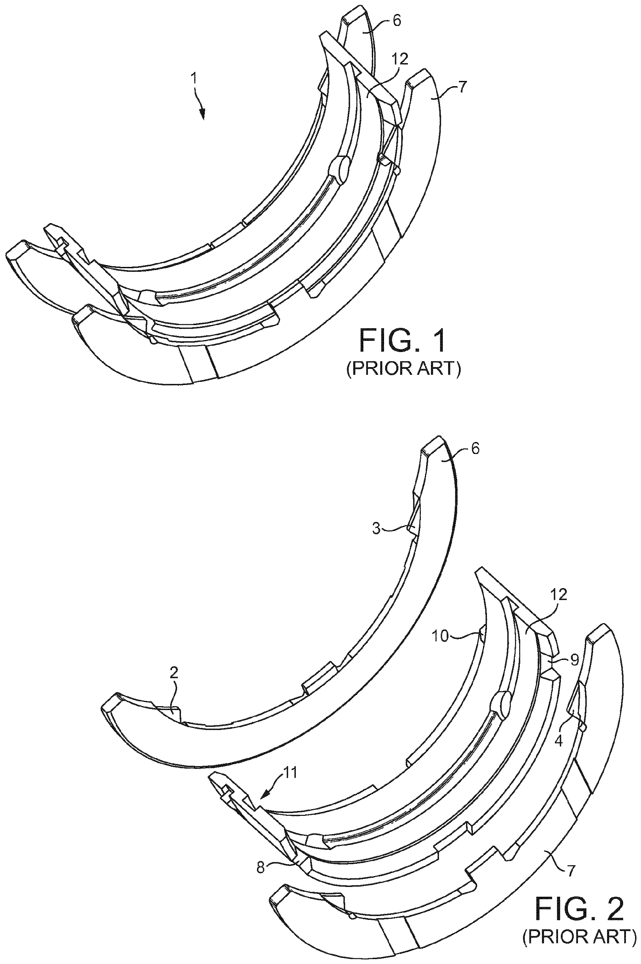

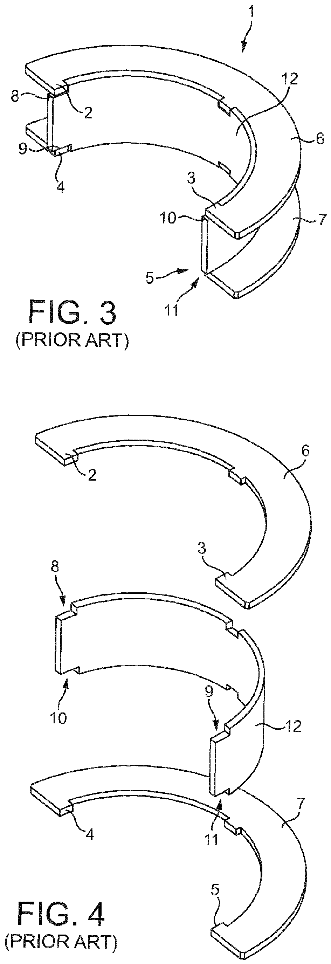

The inventors have appreciated that there may be a number of limitations or disadvantages associated with known types of flanged half-bearings such as those described in the aforementioned prior art references and illustrated in Figures 1 to 4. These may comprise one or more of the following, among others:-
i. as shown in Figures 1 to 4, the prior art flanged half-bearings 1 use clips or 'tangs' 2,3,4,5 proximate the ends of the thrust washers 6,7 for engagement with corresponding notches or recesses 8,9,10,11 proximate the ends of the half-shell bearing 12. These clips or tangs are typically the only thing which hold the thrust washers in engagement with the half-shell bearing to form a self-supporting assembly. It may be fiddly to engage the clips or tangs with the corresponding notches or recesses which may necessitate manual handling of the thrust washers and the half-shell bearing;
ii. the clips or tangs of the prior art devices may require the ends of the half-shell bearing to be pinched to permit engagement of clips or 'tangs' with corresponding notches or recesses;
iii. the clips or tangs of the prior art devices may lead to an increase in the manufacturing lead time;
iv. the clips or tangs of the prior art devices may lead to scrappage of a higher proportion of assembled flanged half-bearings than may be desirable due the thrust washers not being correctly fitted to the half-shell bearing or becoming detached from the half-shell bearing during transportation and handling;
v. the clips or tangs and the corresponding notches or recesses of the prior art being the only thing that forms a self-supporting flanged half-bearing necessitates the use of close tolerances between the clips or tangs and the corresponding notches or recesses. This may require the use of certain manufacturing processes and effective quality control;
vi. the need for close tolerances may also necessitate the use of post-processing operations, such as deburring or the removal of ledges on the clips or tangs and/or the corresponding notches or recesses which may result from the initial forming operation, or the machining of one or more chamfers to facilitate engagement of the clips or tangs and the corresponding notches or recesses. This has the potential to introduce debris (e.g. swarf or metal particulate) which may have an adverse impact on the performance of the half-shell bearing and/or the thrust washers;
vii. the need for additional post-processing operations may add to the cost of manufacture and may have an impact on the manufacturing lead time. It may also contribute to a higher proportion of the thrust washers and/or half-shell bearings being scrapped than may be desirable due to errors in the post-processing operations;
viii. the clips or tangs of the prior art devices, may lead to the resulting flanged half-bearing having greater stiffness, or lower flexibility, than may be desirable for simple and effective installation of the flanged half-bearing into the end product, for example into a recess in an engine housing;
ix. the use in some prior art devices of lines or runs of tack welding to join the thrust washers and the half half-shell bearing may necessitate the use of jigs to support each assembly during manufacture. The resulting flanged half-bearing may also be relatively stiff and have low flexibility which may be undesirable for simple and effective installation of the flanged half-bearing into the end product, for example an engine housing; and
x. the use of welding also has the potential to introduce impurities and/or debris (e.g. weld dust) which may have an adverse impact on the performance of the half-shell bearing and/or the thrust washers.

The inventors have appreciated that there is a need for an improved sliding element, particularly one to be used as a flanged half-bearing flanged bearing, that is more effective than known types of sliding elements, particularly known types of flanged half-bearings, for use in automotive engine applications, including in engines operating stop-start schemes and in particular where the sliding element is to be used to support rotating components such as the crankshaft.

In the following description, the term "flexible" preferably means that once cured, the adhesive remains flexible and provides a flexible coupling between the first and second sliding element components. The term "flexible" means that the adhesive is able to elongate in use of the sliding element.

In the following description, the term "elongation at break" preferably means the elongation at break measured in accordance with ISO 527-3:1995 (Plastics -- Determination of tensile properties -- Part 3: Test conditions for films and sheets) or in accordance with ISO 37:2005 (Rubber, vulcanized or thermoplastic -- Determination of tensile stress-strain properties) or in accordance with the corresponding ISO standard test for the relevant flexible adhesive material.

In the following description, the term "handling time" means the period of time that it takes for the flexible adhesive, once dispensed from suitable dispensing apparatus onto a first and/or a second sliding element component, to cure sufficiently so that the flexible adhesive is able to hold the first and second sliding element components together and form a self-supporting sliding element assembly. After this handling time has expired, the sliding elements may be handled (e.g. to be inspected for quality control purposes or to be packaged for transportation), but it may take further time (e.g. up to 7 days) for the flexible adhesive to be fully cured.

The present invention is defined in the appended independent claims and provides, in a first aspect, a sliding element, comprising: a first sliding element component for sliding engagement with a rotatable component; and a second sliding element component for sliding engagement with a rotatable component; characterised in that the first sliding element component is coupled to the second sliding element component by an adhesive; and wherein the adhesive is a flexible adhesive comprising, in a cured state, an elongation at break of between about 100 percent and about 500 percent.

In preferred embodiments of the present invention, the sliding element may take the form of a flanged half-bearing which comprising a half-shell bearing and a pair of thrust washers coupled to the half-shell bearing to form a self-supporting assembly.

Preferred embodiments of the present invention are particularly suitable for use in one or more of the following: automotive engines; transmissions; pumps; and compressor systems.

The inventors believe that the improved sliding element of the present invention may have a number of advantages over the prior art devices, which may comprise some or all of the following, among others:-
i. the use of a flexible adhesive instead of the clips or tangs of some prior art devices to couple the half-shell bearing and the thrust washers to form a self-supporting flanged half-bearing may reduce the complexity of the sliding element compared to prior art devices and make it quicker and easier to assemble the flanged half-bearing;
ii. the use of a flexible adhesive instead of the clips or tangs of some prior art devices may make it quicker and easier to form a self-supporting flanged half-bearing by eliminating the need for manual handling of the thrust washers and the half-shell bearing;
iii. the use of a flexible adhesive instead of the clips or tangs of some prior art devices may reduce or eliminate the need for pinching of the half-shell bearing in order to engage the thrust washers;
iv. the use of a flexible adhesive instead of the clips or tangs of some prior art devices may reduce the manufacturing lead time due to the removal of fiddly manual operations;
v. the use of a flexible adhesive instead of the clips or tangs of some prior art devices may reduce or eliminate the volume of scrap of reject prior art flanged half-bearings which have been incorrectly assembled or which have become detached during transportation and handling;
vi. the use of a flexible adhesive instead of the clips or tangs of some prior art devices may reduce or eliminate the need for close tolerances between the clips or tangs and the corresponding notches or recesses which should simply the manufacturing process and reduce the associated cost;
vii. the use of a flexible adhesive instead of the clips or tangs of some prior art devices may reduce or eliminate the need for port-processing operations, including deburring or the removal of ledges on the clips or tangs and/or the corresponding notches or recesses which may result from the initial forming operation. This may further simplify the manufacturing process and reduce the associated cost. It may also reduce or eliminate the introduction of debris (e.g. swarf or metal particulate) which may otherwise have an adverse impact on the performance of the half-shell bearing and/or the thrust washers;
viii. the use of a flexible adhesive instead of the clips or tangs or welding of some prior art devices may reduce the stiffness and increase the flexibility of the resulting flanged half-bearings. This may facilitate installation of the flanged half-bearings into the end product, for example an engine housing. It may also reduce the proportion of scrap compared to prior devices that may be too stiff and insufficiently flexible to be installed into the engine housing;
ix. the use of a flexible adhesive instead of the welding used in some prior art devices may reduce or eliminate the associated debris (e.g. weld dust) which may otherwise have an adverse impact on the performance of the half-shell bearing and/or the thrust washers; and
x. preferably, there will not be any degradation or dissolving of the flexible adhesive during use of the flanged bearing. However, the use of a flexible adhesive instead of the welding used in some prior art devices may mean that if there were any minor degradation or dissolving of the flexible adhesive, the resulting debris may be softer than the metal debris that is commonly associated with the prior art devices incorporating welding and may therefore be more likely to pass through the bearing clearance without damaging to the running surfaces of the thrust washers and/or the half-shell bearing or affecting the performance of the flanged half-bearing;
xi. the flexible adhesive may be used to adhere sliding element components made from, or coated with any chosen materials. For example, the flexible adhesive may be used to adhere sliding element components comprising a polymer-based running layer and irrespective of whether it contains any additives or particulate materials such as metal particulates.

In arriving at the present invention, the inventors have reduced the complexity of the prior art devices by, and taken the counterintuitive step of, removing the need for precision-machined clips and tangs with close tolerance, and the need for welding, and replacing them with a simple flexible adhesive connection. In order to arrive at this simple and effective solution, the inventors have taken a step back from the known path of development of flanged half-bearings and made an improvement which has a number of clear advantages compared to the use of known flanged half-bearings. The inventors have effectively reengineered the construction of flanged half-bearings and provided an elegant solution to the limitations associated with known flanged half-bearings by making them simpler and cheaper to make and simpler and easier to use.

The inventors have appreciated that selection of the flexible adhesive is key to the performance of the resulting sliding element. The flexible adhesive will have some or all of the following properties, among others:-
i. a suitable balance between cure time and flexibility of the sliding element. In order for the flexible adhesive to cure quickly, the sliding element may end up being stiffer and less flexible than may be desirable. However, in order for the sliding element to be reasonable flexible, the cure time of the flexible adhesive may be longer than may be desirable which may affect the manufacturing lead time;
ii. a viscous flexible adhesive that is self-supporting as soon as it is dispensed, or soon after it is dispensed, from the dispensing apparatus, and that remains self-supporting as it cures. There may be a balance to be achieved here between ensuring that the flexible adhesive may be dispensed relatively quickly and uniformly and ensuring that the flexible adhesive is viscous and self-supporting and resistant to running or smearing;
iii. the adhesive, once cured, has a relatively high elongation at break (or elongation capacity). If its elongation capacity is too low, the flexible adhesive may have a tendency to reach its elastic limit too early and fail during handling or installation of the sliding element. However, in order for its elongation capacity to be high, that may require the flexible adhesive to be quite fluid which may necessitate a longer cure time before it is self-supporting which may have an impact on the manufacturing lead time;
iv. offer good resistance to degradation in the presence of lubricants such as engine oil;
v. offer good resistance to degradation in the operating temperatures associated with automotive engines; and
vi. have sufficient bond strength or adhesion strength to offer some torque load capability. However, as discussed below in relation to preferred embodiments of the present invention, the bond strength need not be particularly high due to the preference for the sliding element to comprise at least one additional mechanical connection between the first and second sliding element components. There is also a balance to be achieved between the flexible adhesive having sufficient bond strength or adhesion strength offering some torque load capability and ensuring that the sliding element retains some flexibility.

The present invention is defined in the appended independent claims 1 and 12.

Some preferred features of the present invention are set out in the dependent claims to which reference should now be made.

Preferably, the sliding element is for supporting a rotatable shaft. Preferably, the sliding element is for supporting a crankshaft and/or a camshaft. Preferably, the sliding element is for supporting a crankshaft for an automotive engine.

Preferably, the first sliding element component comprises a bearing element (e.g. a half-shell bearing). The half-shell bearing may be a simple known type of half-shell bearing, such as a metal or bi-metal half-shell bearing that is typically used in the construction of flanged half-bearings for automotive engine applications. Alternatively, the bearing may, for example, comprise a polymer-based running layer or a sintered coating of a suitable material.

Preferably, the second sliding element component comprises at least one thrust washer. More preferably, the second sliding element component comprises a pair of thrust washers. The thrust washers may be identical or different from one another. The thrust washers may be a simple, known-type of thrust washer, such as a metal or bi-metal thrust washer that is typically used in the construction of flanged half-bearings for automotive engine applications. Alternatively, the bearing may, for example, comprise a polymer-based running layer or a sintered coating of a suitable material.

Particularly suitable thrust washers comprise, for example, improved thrust washers of the type described in published international patent application number WO2014/091206, providing a thrust washer comprising a polymer layer of profiled thickness, or of the type described in UK patent application number United Kingdom Patent Application No. 1507205.1 providing a thrust washer comprising a polymer-based running layer comprising a textured surface. However. these earlier thrust washers will require some modification in accordance with the present invention.

Preferably, the thrust washers are adhered to the bearing element by the flexible adhesive. As will be discussed below, the flexible adhesive may be applied to the half-shell bearing. Alternatively, the flexible adhesive may be applied to each thrust washer. Alternatively, the flexible adhesive may be applied both to the half-shell bearing and to each thrust washer. As will be discussed below, when the flexible adhesive is applied to the half-shell bearing, it may be applied to the back side of the half-shell bearing. Alternatively, it may be applied to the side face of the half-shell bearing. When the flexible adhesive is applied to the thrust washers, it may be applied to a top or bottom face of each thrust washer. Alternatively, it may be applied to the side face of each thrust washer.

Preferably, the flexible adhesive, once cured, has an elongation at break (or elongation capacity) of between about 350 percent and about 450 percent, preferably about 400 percent. This may reduce the likelihood of the flexible adhesive being detached from the first and/or the second sliding element component during handling or installation of the sliding element or during use of the sliding element.

The flexible adhesive may comprise a flexible silicone or a flexible oxime silicone or a flexible alkoxy silicone. Alternatively, the flexible adhesive may comprise a flexible rubber, a flexible nitrile or a flexible epoxy or a flexible polyurethane or a flexible epoxy polysulphide or a hybrid comprising any two or more of these materials.

Preferably, the adhesive comprises a powertrain grade flexible adhesive comprising a silicone or an oxime silicone or an alkoxy silicone.

Preferably, the flexible adhesive comprises an oxime silicone. This is a non-acidic type of silicone which should not corrode a metal or bi-metal substrate to which the flexible adhesive may be applied. Oxime silicones also offer good resistance to degradation or decomposition in the presence of lubricants, including automotive engine oils. However, other types of silicones may be also used including, for example, an alkoxy silicone which is also a non-acidic (or neutral) type of silicone and is reasonably fast curing and exhibits reasonably high strength. In some circumstances it may be desirable to use an acetoxy silicone due to its fast curing time and high strength but as this is an acidic type of silicone, it may carry a risk of corrosion of a metal or bi-metal substrate.

Preferably, the flexible adhesive is resistant, during use of the sliding element, to lubricants, particularly engine oils, and to typical engine operating temperatures, particularly in the region of about 90 degrees C to about 150 degrees C. This makes the flexible adhesive particularly suitable for use in engines, for example, where the sliding element is used to support a crankshaft and is immersed in engine lubricating oil.

Preferably, the flexible adhesive is a single part flexible adhesive. The flexible adhesive may alternatively be a multi-part flexible adhesive (e.g. a two-part or a three-part flexible adhesive). A single part flexible adhesive may be quicker and easier to apply and may be stored in the applicator head of a dispensing apparatus for a longer period of time before it cures (sometime referred to as "pot life"), and the applicator head must be replaced or cleaned. A multi-part flexible adhesive (e.g. a two-part flexible adhesive) may provide a faster curing time and thereby a reduction in the manufacturing lead time. However, it may also have a shorter pot life.

Preferably, the flexible adhesive is a viscous, substantially self-supporting, flexible adhesive. This may reduce a likelihood of the flexible adhesive running or smearing and contaminating other areas of the first and/or second sliding element component. It may also reduce the need for delicate handling of the first and/or second sliding element components to which the flexible adhesive has been applied. It may also reduce the period of time they must remain stationary once the flexible adhesive has been applied before they may be handled (i.e. reduce the handling time).

Preferably, the flexible adhesive is a room temperature curing flexible adhesive (e.g. a Room Temperature Vulcanising (RTV) silicone). Alternatively, the flexible adhesive may be cured by another means, for example by an ultraviolet (UV) curing process, though this would necessitate the use of dedicated UV curing equipment and would require line of sight through any joints in order to ensure that the flexible adhesive is fully cured.

Preferably, the flexible adhesive has a bond strength or adhesion strength of between about 0.5MPa and about 5MPa. More preferably, the flexible adhesive has a bond strength or adhesion strength of between about 1MPa and about 2MPa. More preferably, the flexible adhesive has a bond strength or adhesion strength of between about 1.5MPa and about 2MPa. Such a bond strength or adhesion strength is expected to provide a suitable balance between ensuring that the flexible adhesive has some torque load capability and is sufficiently flexible to facilitate handling and installation of the resulting sliding element.

The flexible adhesive may be applied to the first sliding element component (which may, according to preferred embodiments of the invention, be a half-shell bearing) or to the second sliding element component (which may, according to preferred embodiments of the invention, be one or more thrust washers) or to both the first sliding element component and the second sliding element component. It may be easier to apply to the flexible adhesive to the first sliding element component (e.g. a half-shell bearing) due to the greater width of the half-shell bearing compared to the width of the thrust washers.

The flexible adhesive may be applied in the form of an elongate bead of flexible adhesive. This may be the simplest and most uniform method of application of the flexible adhesive. However, it may require a larger quantity of flexible adhesive and may increase the manufacturing lead time compared to alternative flexible adhesive application regimes. It may also increase the stiffness and reduce the flexibility of the resulting sliding element compared to alternative flexible adhesive application regimes.

Alternatively, the flexible adhesive may be applied in a series of short runs or spots. This may require a smaller quantity of flexible adhesive and/or may reduce the manufacturing lead time compared to the application of a continuous bead. It may also reduce the stiffness and increase the flexibility of the resulting sliding element compared to the application of a continuous bead. As discussed elsewhere in this specification, greater flexibility may be desirable during handling and installation of the sliding element.

Using high quality dispensing equipment should mean that regardless of the chosen application regime, the flexible adhesive may be metered out very accurately and so that the diameter of the bead or short runs or spots is substantially uniform and there is there is minimal spreading of the flexible adhesive when the first sliding element component (e.g. a half-shell bearing) and the second sliding element component (e.g. thrust washers) are brought into engagement to form the sliding element.

The flexible adhesive (whether applied as a continuous bead or a series of short runs or spots) may be applied only to the part of the first sliding element component (e.g. a half-shell bearing) that is expected to come into contact with the second sliding element component). The flexible adhesive may be applied to the first sliding element component and/or the second sliding element component as required to provide the desired properties of the sliding element (e.g. the stiffness or flexibility of the sliding element).

As thrust washers for flanged half-bearings for automotive applications are typically between about 1mm and about 5mm thick, the bead of flexible adhesive is preferably applied to the first sliding element component (e.g. a half-shell bearing) so that it has a diameter or thickness of less than the thickness of the thrust washer. For example, where the thrust washers are, say, 1mm thick, the adhesive is preferably applied so that it has a thickness or diameter of between about 0.1mm and about 1mm, more preferably between 0.4mm and about 0.6mm, more preferably about 0.5mm.

Preferably, the first sliding element component is additionally coupled to the second sliding element component by one or more mechanical couplings. This may enable the sliding element to withstand higher torque loads that might otherwise overcome the bond strength or adhesion strength of the flexible adhesive or lead to the flexible adhesive extending beyond the limit of its elasticity and cause the flexible adhesive to fail. For example, in a flanged half-bearing according to preferred embodiments of the present invention, the one or more mechanical couplings may prevent the thrust washers from rotating, during use of the flanged half-bearing, relative to the half-shell bearing.

Preferably, the one or more mechanical couplings comprises one or more notches, recesses, cut-outs or slots on the first sliding element component (e.g. a half-shell bearing) for engagement with corresponding tabs or tags on the second sliding element component (e.g. the thrust washers).

Preferably, the first sliding element component (e.g. a half-shell bearing), comprises a single recess or cut-out in each side of the half-shell bearing that is positioned at, or near to, the crown of the half-shell bearing. Preferably, the second sliding element component (e.g. the thrust washers), comprises a single tab extending at or near the crown of each thrust washer in a direction that is perpendicular to a tangent to the curved outer surface of the thrust washer. In other words, the single tab preferably extends towards a centre of curvature of the thrust washer. Preferably, the tabs are engageable with the recesses so as to interlock the first and second sliding element components and constrain them relative to one another so as to prevent relative rotation of the first and second sliding element components.

Alternatively, the first sliding element component (e.g. a half-shell bearing) may comprise a single tab and the second sliding element component (e.g. the thrust washers), may comprise a single recess or cut-out (i.e. the reverse of the arrangement described above).

In a further alternative embodiment (not shown in the Figures), the flexible adhesive may be used in addition to one or more clips or tangs such as those used in some prior art flanged half-bearings. This may provide a flanged half-bearing having additional stiffness compared to a flanged half-bearing having only an adhesive coupling or only having the one or more clips or tangs. Alternatively, it may enable the clips or tangs have lower tolerances (i.e. to be a looser fit) than those that are used in some prior art flanged half-bearings, which may have a number of benefits over the prior art flanged half-bearings having close tolerances, including some or all of the benefits described above.

An advantage of the use of a recess at or near the crown of the first sliding element component (e.g. the half-shell bearing) and a tab extending at or near the crown of the second sliding element component (e.g. the thrust washers) is that these mechanical features may be formed during the initial forming operation (e.g. by stamping, laser cutting or another suitable process) when the first and second sliding element components are formed as blanks from sheet material. The interlocking or interleaved nature of the arrangement of the components, particularly the thrust washers, on a sheet of raw material is such that the tabs are formed from raw material that would otherwise be discarded as scrap.

The recesses of the first sliding element component (e.g. the half-shell bearing) and the tabs of the second sliding element component (e.g. the thrust washers) may be spaced from the crown of first sliding element component and the second sliding element component so as to provide a mistake-proofing (or 'poka-yoke') device to assist operators on the manufacturing line to identify the correct orientation of the thrust washers relative to the half-shell bearing.

Preferably, one or both of the half-shell bearing and the thrust washers comprises a polymer-based running layer. Other running layer materials may also be used, including a sintered coating of a suitable material. A further advantage of sliding elements according to preferred embodiments of the present invention comprising a flexible adhesive is that, unlike in some known machined flanged bearings, different materials can be used for the bearing and thrust washer running surfaces or running layers. For example, one of them may have a polymer-based running layer and the other may have a running layer or surface made from a different material.

Preferably, the polymer-based running layer is formed on the half-shell bearing and/or the thrust washer substrate by a spraying or a screen printing process.

The polymer-based running layer be applied directly to the thrust washer substrate and/or the half-shell bearing substrate. Alternatively, the polymer-based running layer may be applied to an intermediate layer applied to the thrust washer substrate and/or the half-shell bearing substrate. The thrust washer substrate and/or the half-shell bearing substrate may be a metal or bi-metal substrate. The intermediate layer may also be a metal or bi-metal layer.

The polymer-based running layer may be formed by depositing a plurality of polymer-based sub-layers. The plurality of polymer-based sub-layers may comprise sub-layers of the same or different thicknesses. Successive polymer running layers may be differently patterned, to build up a profiled polymer-based running layer of non-uniform thickness. The use of sub-layers may provide greater control of the thickness of the profiled polymer running layer.

The present invention provides in a first aspect a sliding element according to the appended independent claim 1 and, in a second aspect a flanged half-bearing comprising the sliding element of the first aspect of the invention.

The present invention provides, in a third aspect a flanged bush comprising the sliding element of the first aspect of the invention.

The present invention provides, in a fourth aspect, an engine comprising the sliding element of the first aspect of the invention or the flanged half-shell bearing of the second aspect of the invention or the flanged bush of the third aspect of the invention.

The present invention provides in a fifth aspect according to the appended independent claim 12 a method of manufacturing a sliding element or a flanged half-bearing or a flanged bush of the first, second and third aspects of the invention.

Preferably, the handling time is between about 5 minutes and about 20 minutes in an ambient environment. This may provide a suitable balance between the required manufacturing lead time and the ability to handling the self-supporting sliding element or flanged half-bearing or flanged bush assembly after the handling time.

The axial face of the thrust washer may be provided with one or more oil distribution grooves running between the inner and outer edges of the thrust washer. Preferably, the oil distribution grooves extend across the thrust washer from the inner edge to the outer edge in a continuous arrangement enabling through flow of oil. The axial face of the polymer-based running layer may therefore comprise a plurality of disconnected portions, separated by the one or more oil distribution grooves. The provision of the oil distribution grooves in the axial face of the thrust washer may enhance the quality of the oil film between the thrust washer and the shaft. In use, lubricating oil may be pumped into the bearing clearance between the corresponding half-shell bearing and rotating crankshaft journal, and leaks out into the further clearance between the thrust washer and the counterface of the rotating crankshaft web.

The oil grooves may extend all the way through a depth of the polymer running layer. In this arrangement, a base of the grooves may be formed by the thrust washer substrate or by an intermediate layer positioned on the thrust washer substrate. This may result, for example, from applying the polymer-based running layer to the thrust washer substrate by a spraying or screen printing process in which the polymer-based running layer is applied to the substrate (or an intermediate layer) in a single spraying or screen printing operation, or in a series of spraying or screen printing operations, using a mask to prevent application of the polymer-based running layer on certain portions of the thrust washer substrate.

Alternatively, the oil grooves may extend partially through a depth of the polymer-based running layer deposited on the thrust washer substrate. In this arrangement, the base of the grooves may be formed by a portion of the thickness of the polymer-based running layer. This may result, for example, from applying the polymer-based running layer over the entire axial face of the thrust washer substrate and subsequently removing a portion of the axial face of the polymer-based running layer using a material removal process, or by applying the polymer to the thrust washer substrate in a series of sublayers i.e. building up the polymer-based running layer using a series of two or three or more layers and subsequently removing a portion of only one, or some, of the sublayers to form the oil grooves.

The thrust washers and/or the half-shell bearing may be provided with joint face relief portions at one or both ends.

Although the various Figures and the associated description show flanged half-bearings (i.e. flanged semi-annular bearings, the present invention equally applies to flanged bearings (i.e. flanged annular bearings).

Some example embodiments of the present invention will now be described with reference to the accompanying drawings, in which:-
Figure 1 is a perspective view of a prior art sliding element in the form of a flanged half-bearing comprising a half-shell bearing and a pair of thrust washers;
Figure 2 is an exploded perspective view of the prior art flanged half-bearing of Figure 1;
Figure 3 is a perspective view of a further prior art sliding element in the form of a flanged half-bearing comprising a half-shell bearing and a pair of thrust washers;
Figure 4 is an exploded perspective view of the prior art flanged half-bearing of Figure 3;
Figure 5 is a perspective view of a sliding element according to a first example embodiment of the present invention in the form of a flanged half-bearing comprising a half-shell bearing and a pair of thrust washers;
Figure 6 is a further perspective view of the flanged half-bearing of Figure 5;
Figure 7 is a side view of the flanged half-bearing of Figure 5;
Figure 8 is a perspective view of the half-shell bearing of the flanged half-bearing of Figure 5;
Figure 9A is a further side view of the flanged half-bearing of Figure 5 with the thrust washers in an elevated position above the half-shell bearing of Figure 8;
Figure 9B is a further side view of the flanged half-bearing of Figure 5 with the thrust washers brought into engagement with the half-shell bearing of Figure 8;
Figure 10 is a perspective view of a half-shell bearing of a sliding element according to a second example embodiment of the present invention;
Figure 11 is a perspective view of a half-shell bearing of a sliding element according to a third example embodiment of the present invention;
Figure 12 is a side view of a thrust washer of a sliding element according to a fourth example embodiment of the present invention; and
Figure 13 is a perspective view of a flanged half-bearing comprising the thrust washer of Figure 12 in which the thrust washer is being brought into engagement with a corresponding half-shell bearing.

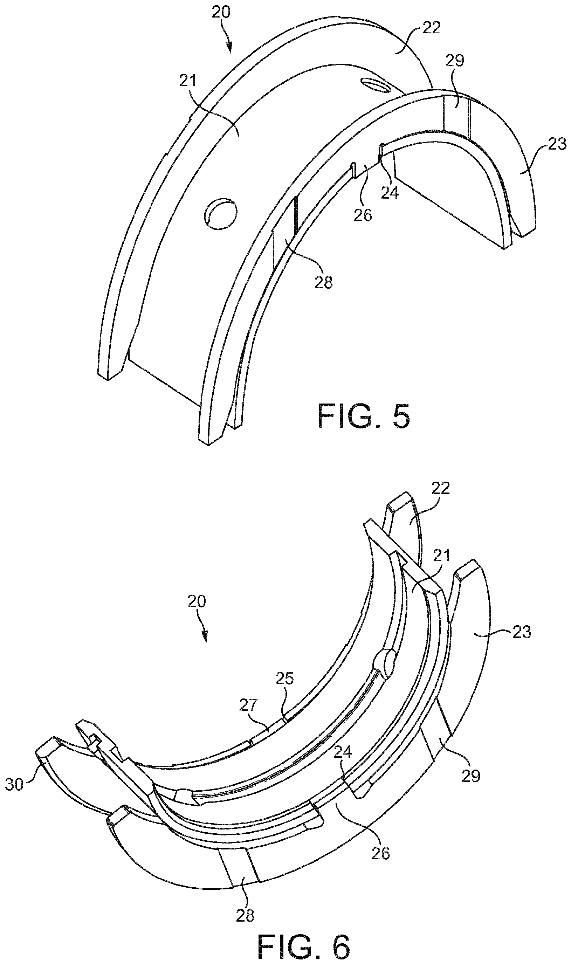

Figures 5 to 9 illustrate a sliding element 20 according a first example embodiment of the present invention in which the sliding element takes the form of a flanged half-bearing comprising a half-shell bearing 21 and a pair of thrust washers 22,23.
The semi-annular half-shell bearing 21 comprises a notch 24,25 (or recess or cut-out or slot) on each side of the back side of the bearing at or near the crown. Each semi-annular thrust washer 22,23 comprises a tab (or tag) 26,27 extending towards a centre of curvature of the thrust washer.

The notches of the half-shell bearing are configured to receive the tabs of the thrust washers so that when the tabs of the thrust washers are received within the notches, a face of the thrust washer that connects the annular side surfaces (i.e. a lower surface as shown in the Figures) abuts a back side of the half-shell bearing (i.e. the opposite side to the side of the half-shell bearing which provides a running surface for a shaft supported by the flanged half-bearing - the upper surface as shown in the Figures).

As will be discussed further below, one important advantage of the use of a flexible adhesive to couple the half-shell bearing and the thrust washers instead of the clips or tangs of some prior art flanged half-bearings, is that the tabs and the notches do not need to be precision machined and only need have loose tolerances. In other words, the tabs need only have a relatively loose fit within the notches compared to those of some known flanged half-bearings comprising clips or tangs.

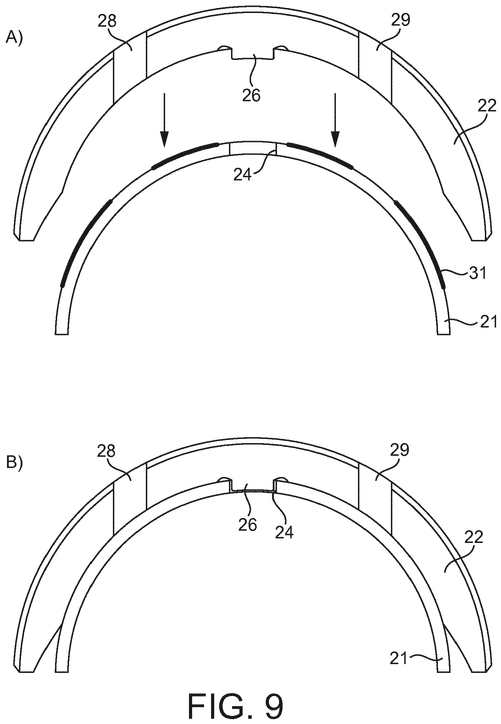

When the thrust washers and the half-shell bearing are assembled as shown in Figure 9 to form the flanged half-bearing 20 of Figure 5, the thrust washers 22,23 are supported by the half-shell bearing 21. In other words, the thrust washers are hung from opposite sides of the half-shell bearing.

The tabs may be spaced a short distance from the crown of the thrust washers and in the same direction on the opposing thrust washers to ensure that they may only be fitted in the correct orientation (i.e. to provide a poka yoke).

Each half-shell bearing may comprise a joint face relief portion at each end for accommodate cap shift of two opposing half-shell bearings.

Each thrust washer may comprises one or more oil distribution grooves 28,29 for permitting through flow of oil to the counterface between the thrust washer and the crankshaft. Each thrust washer may also comprises a chamfer 30 along an edge.

Each thrust washers comprises a thrust washer substrate, which may be a bimetal thrust washer substrate and a sliding layer, commonly referred to as a 'running layer', 'sliding layer' or 'overlay', applied to the thrust washer substrate. The running layer of each thrust washer is preferably a polymer-based running layer.

The half-shell bearing comprises a bearing substrate, which may be a bimetal substrate and a sliding layer applied to the bearing substrate. The running layer is preferably a polymer-based running layer.

The polymer-based running layer of the thrust washers and/or the half-shell bearing is formed of a running layer material and is formed on the underlying thrust washer substrate to give the thrust washer the desired characteristics e.g. the desired load carrying capacity and wear resistance. The matrix of the running layer material (which generally provides the highest volume percentage portion of the running layer material) is formed of a polymeric material. Examples of suitable polymeric materials comprise: cross-linkable bonding agents; thermosetting plastics; high melting point thermoplastics; materials comprising a matrix of at least one high melting point thermoplastic material; fibre-reinforced plastics; any combination of these materials. Other suitable materials are envisaged and will be readily apparent to the skilled person. Particularly suitable polymeric materials comprise: PAI (Polyamide-imide); PI (Polyimide); epoxy; epoxy resin; phenolic resin; silicone resin; polyether ether ketone or a combination of any of these materials. These materials are characterised by high temperature resistance and excellent media resistance (such as chemical resistance to lubricants). One particularly preferred polymeric material for thrust washers according to preferred embodiments of the present invention is Polyamideimide (PAI).

The running layer material may comprise a composite of a plastics polymer matrix with one or more particulates. For example, running layer material may comprise a hard particulate to provide improved wear resistance (e.g. ceramic powder, silica, and metal powder such as aluminium flakes). Other suitable materials are envisaged and will be readily apparent to the skilled person.

The running layer material may optionally comprise at least one soft particulate e.g. a solid lubricant. Suitable solid lubricants comprise: metal sulphides with layered structures; graphite; hexagonal boron nitride (h-BN); molybdenum disulfide (MoS₂); tungsten disulphide (WS₂); a fluoropolymer such as PTFE; or a combination of any of these materials. Other suitable materials are envisaged and will be readily apparent to the skilled person.

The running layer material may comprise a matrix of a Polyamide-imide plastics polymer material and comprising distributed throughout the matrix: between about 5%vol and about 15%vol of a metal powder; between about 1%vol and about 15%vol of a fluoropolymer, the balance being the Polyamide-imide resin (apart from incidental impurities).

The running layer material may optionally comprise one or more additional materials or particulates in order to tailor its properties to a particular application, as will be readily apparent to the skilled person.

Optionally, each thrust washer substrate and/or the bearing substrate may comprise an intermediate layer which may provide an improved surface for adhesion of the polymer-based running layer and may be advantageous when certain supporting materials are used. Suitable materials for the optional intermediate layer comprise nickel, silver, copper and/or iron or alloys comprising one or more of such materials. The optional intermediate layer may comprise a combination of two or more or such materials/alloys. The intermediate layer may also comprise an adhesion promoter and/or be subjected to a pre-treatment, for example a phosphating, chromating or silicating treatment. Other suitable materials are envisaged and will be readily apparent to the skilled person.

In addition to the tabs 26,27 on the thrust washers for engagement with the recesses on the half-shell bearing, a flexible adhesive 31 is used to adhere each thrust washer to the back side of the half-shell bearing so as to provide a self-supporting flanged half-bearing assembly.

The flexible adhesive is resistant, during use of the flanged half-bearing, to engine oil and to engine temperatures in the region of about 90 degrees C to about 150 degrees C. This makes it particularly suitable for use in automotive engine environments, for example, where the flanged half-bearing is used to support a crankshaft and where it is immersed in engine lubricating oil or regularly comes into contact with engine oil.

Suitable flexible adhesives comprise powertrain grade flexible adhesives comprising silicone. A particularly suitable flexible adhesive comprises an oxime silicone. Such types of silicone are non-acidic and exhibits good resistance to automotive engine oils and operating temperatures. Other suitable flexible adhesive materials have already been described above.

The flexible adhesive is a single part flexible adhesive and is highly viscous and self-supporting. Preferably the flexible adhesive is a thixotropic material, preferably a thixotropic paste. The flexible adhesive is preferably, is cured at room temperature.

The flexible adhesive preferably has, once cured:-
(i) an elongation at break, according to ISO 37, of greater than about 100 percent or about 150 percent or about 200 percent or about 250 percent or about 300 percent or about 350 percent or about 400 percent and/or less than about 400 percent or about 350 percent or about 300 percent or about 250 percent or about 200 percent or about 150 percent; or
(ii) an elongation at break, according to ISO 527-3 of greater than about 50 percent or about 100 percent or about 150 percent or about 200 percent or about 250 percent and/or less than about 250 percent or about 200 percent or about 150 percent or about 100 percent.

In one suitable type of flexible adhesive comprising an oxime silicone, the adhesive preferably has, once cured for 7 days at 25 degrees C and 50±5 percent Relative Humidity (RH) an elongation at break according to ISO 37 of greater than or equal to about 400 percent.

In another suitable type of flexible adhesive comprising an alkoxy silicone, the adhesive preferably has, once cured for 7 days at 22 degrees C and 50 percent Relative Humidity (RH) an elongation at break according to ISO 527-3 of about 210 percent.

It may be possible to accelerate the curing process of the adhesive, if required, by increasing the temperature and/or the humidity.

As a result of the desired characteristics of the flexible adhesive, including requirement for flexibility, the flexible adhesive is likely to have an adhesion strength of between about 0.5MPa to about 5MPa.

The flexible adhesive has a handling time of between about 5 minutes and about 30 minutes. Preferably, it has a handling time of between about 5 minutes and about 10 minutes. After expiry of the handling time, the flexible adhesive provides a self-supporting flanged half-bearing assembly which may then continue along the manufacturing line and, for example be subject to quality control checks and packaged for transportation. It is likely to take longer than the handling time for the flexible adhesive to be fully cured.

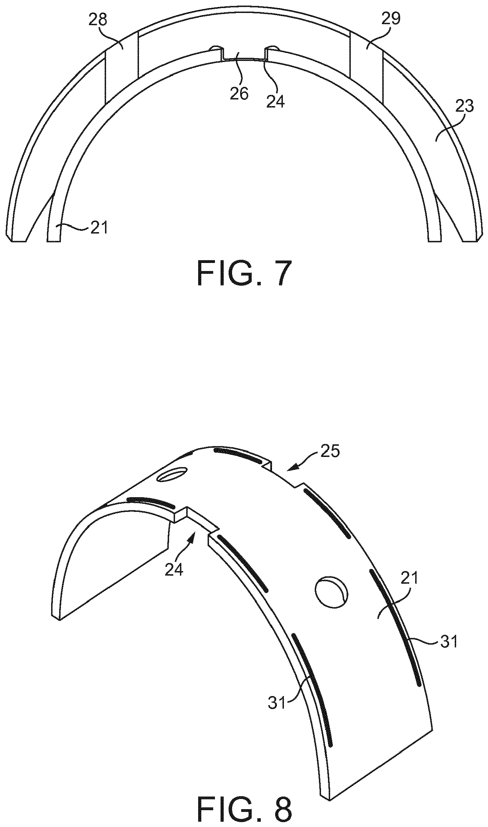

The flexible adhesive 31 may be applied to the half-shell bearing in the form of an elongate bead of flexible adhesive as shown in Figure 8 and has a diameter or thickness of about 0.5mm. This means that when the thrust washers are brought to engagement with the half-shell bearing, although there will be some flattening and spreading out of the flexible adhesive bead, there is unlikely to be any movement or spreading of the flexible adhesive beyond the width of the thrust washers, which are typically between about 1mm and about 2mm thick.

As the flexible adhesive 31 is applied to the back side or back surface of the half-shell bearing (i.e. opposite side of the bearing substrate to the running layer) which is not typically coated with the polymer-based running layer material, the flexible adhesive is applied to a bare metal surface. As the face of the thrust washers that bears against the half-shell bearing (i.e. the face connecting the inner and outer annular shaped side surfaces - the lower face as shown in the drawings) is not typically coated with the polymer-based running layer material, the flexible adhesive will typically come into contact with a further bare metal surface. Therefore, when the thrust washers are brought to engagement with the half-shell bearing, the flexible adhesive will be sandwiched between two bare metal surfaces. However, one advantage of the use of a flexible adhesive is that it may be applied to a surface of any material and could therefore also be used on surfaces that are provided with a polymer-based running layer or a running layer comprising other materials.

As shown in Figure 9, assembly of the flanged half-bearing involves positioning the half-shell bearing 21 with the beads of flexible adhesive 31 applied to the back side in an upturned position so as to form an arch and then simultaneously lowering the thrust washers 22,23 onto the half-shell bearing and continuing to lower them until the tabs 26,27 on the thrust washers engage with the recesses 24,25 in the half-shell bearing and the flexible adhesive is sandwiched between them to form the arrangement of Figures 5 to 7. Following the initial assembly, the thrust washers may be held relative to the half-shelf bearing (e.g. using a suitable jig) or the assembled flanged half-bearing may be left to rest (e.g. on a carrier) for the specified handling time until the flexible adhesive has cured sufficiently for the assembled flanged half-bearing to be self-supporting.

In use of the flanged half-bearing, the torque loads in the engine are primarily accommodated by the recesses and tabs which may have loose tolerances as they are not required to act as a clips for holding the flanged half-bearing together during handling and installation.

The elongation at break (or elongation capacity) of the flexible adhesive is preferably sufficient for the flexible adhesive to remain adhered both to the thrust washers and to the half-shell bearing during a relatively small amount of rotation of the thrust washers relative to the half-shell bearing until the tabs come into contact with the sidewalls of the recesses and prevent further relative rotation of the thrust washers relative to the half-shell bearing. In other words, the aim is for the flexible adhesive to remain adhered to both the thrust washers and the half-shell bearing as the loose tolerances between the tabs and the recesses are taken up.

The flexible adhesive will preferably also remain adhered both to the thrust washers and to the half-shell bearing throughout the operational life of the flanged half-bearing, although in use the flexible adhesive may be largely redundant once the flanged half-bearing has been installed in the engine (not claimed). The flexible adhesive is used primarily to hold the assembled flanged half-bearing together during handling and installation and then, during operation of the flanged half-bearing, the tabs and notches become in use the primary connection between the thrust washers and the half-shell bearing (not claimed).

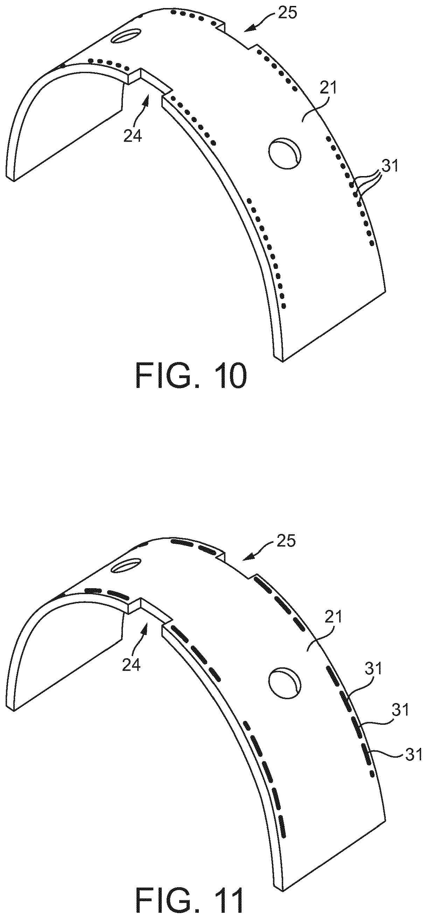

In the second and third embodiments illustrated in Figures 10 and 11, the flexible adhesive is applied to the half-shell bearing in a series of short runs or spots. This may advantageously require a smaller quantity of flexible adhesive and provide increased flexibility of the resulting flanged half-bearing compared to the application of a continuous bead of the first embodiment. Other suitable application regimes for the flexible adhesive will be readily apparent to the skilled person.

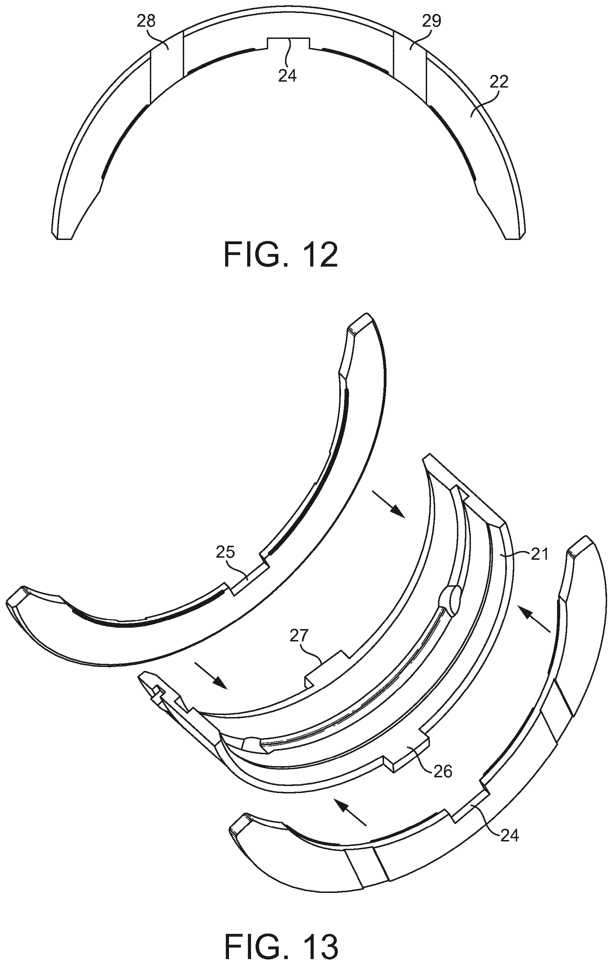

In the fourth embodiment illustrated in Figures 12 and 13, the thrust washers 22,23 are each provided with a single notch 24,25 and the half-shell bearing 21 is provided with corresponding tabs 26,27 (i.e. the reverse of the earlier embodiments). The bead of flexible adhesive is applied to a side face of each thrust washer adjacent a lower curved edge of each washer. As shown in Figure 13, the thrust washers are then brought into engagement with the side faces of the half-shell bearing, sandwiching the flexible adhesive bead between the thrust washers and the half-shell bearing. It will be appreciated that the flexible adhesive may be applied in any of the arrangements shown in Figures 10 to 13. Other suitable application regimes for the flexible adhesive will also be readily apparent to the skilled person.

In a further alternative embodiment (not shown in the Figures), one or both of the thrust washers may be provided with more than one tab for engagement with a corresponding number of recesses in the half-shell bearing (or vice versa). However, as these are not required to act as a clips for holding the flanged half-bearing together, they will preferably extend in parallel to one another so that they simultaneously engage with the corresponding recesses during the assembly operation described above and with reference to Figure 9, without any need for bending or pinching of the half-shell bearing.

In a further alternative embodiment (not shown in the Figures), the flexible adhesive may be used in addition to one or more clips or tangs such as those used in some prior art flanged half-bearings. This may provide a flanged half-bearing having additional stiffness compared to a flanged half-bearing having only an adhesive coupling or only having the one or more clips or tangs. Alternatively, it may enable the clips or tangs have lower tolerances (i.e. a looser fit) than those that are used in some prior art flanged half-bearings which may have a number of benefits over the prior art flanged half-bearings having close tolerances, as described above.

A suitable process for manufacturing a sliding element according to preferred embodiments of the present invention may comprise the following steps:-
a) providing a first sliding element component for supporting a first portion of a rotatable engine component;
b) providing a second sliding element component for supporting a second portion of a rotatable engine component;
c) applying the flexible adhesive comprising silicone to a at least a portion of the first sliding element component and/or the second sliding element component;
d) bringing the first sliding element and the second sliding element component into engagement (e.g. in the manner shown in Figure 9); and
e) maintaining the first sliding element and the second sliding element in engagement for a handling time during which the flexible adhesive cures to a point at which the first sliding element and the second sliding element form a self-supporting sliding element or flanged half-bearing.

It will be appreciated that these steps need not necessarily be carried out in this order and that they may be carried out in a different order.

It will be appreciated that step a) and/or step b) of the method may involve several steps, including cutting or stamping first and/or second sliding element blanks from a sheet of raw materials, forming of the first or second sliding element blanks and applying one or more layers of material on the formed or unformed blank, for example an intermediate layer and/or a polymer-based running layer.

It will also be appreciated that additional method steps may be included as required. For example, prior to step c, it may be beneficial to wash and/or degrease the first sliding element component and/or the second sliding element component, or perhaps only the portions of those components that will come into contact with the flexible adhesive. Additional treatment of the surfaces, e.g. by grit blasting or shot peening is unlikely to be required and carries the risk of introducing impurities.

## Claims

1. A sliding element (20), comprising:-
a first sliding element component (21) for sliding engagement with a rotatable component; and
a second sliding element (22,23) component for sliding engagement with the rotatable component;
wherein the first sliding element component (21) is coupled to the second sliding element component (22,23) by an adhesive (31);
**characterised in that** the adhesive (31) is a flexible adhesive comprising, in a cured state, an elongation at break of between about 100 percent and about 500 percent.

2. A sliding element (20) according to claim 1 for supporting a rotatable shaft.

3. A sliding element (20) according to claim 1 or 2, wherein the flexible adhesive (31) comprises a flexible silicone.

4. A sliding element (20) according to any of the preceding claims, wherein the flexible adhesive (31) comprises a flexible oxime silicone or a flexible alkoxy silicone.

5. A sliding element (20) according to any of the preceding claims, wherein the flexible adhesive (31) is substantially resistant to temperatures of at least between about 90 degrees C and about 150 degrees C.

6. A sliding element (20) according to any of the preceding claims, wherein the first sliding element component (21) is additionally coupled to the second sliding element component (22,23) by one or more mechanical features.

7. A sliding element (20) according to claim 6, wherein the one or more mechanical features comprise at least one tab (26,27) on the first sliding element component for engagement with at least one corresponding notch (24,25) on the second sliding element component, or vice versa.

8. A flanged half-bearing (20) comprising a sliding element (20) according to any of the preceding claims, wherein the first sliding element (21) component is a half-shell bearing and the second sliding element component (22,23) is at least one thrust washer.

9. A flanged half-bearing (20) according to claim 8, wherein one or both of the half-shell bearing (21) and the at least one thrust washer (22,23) comprises a polymer-based running layer.

10. A flanged bush comprising a sliding element (20) according to any of claims 1 to 7.

11. An engine comprising a sliding element (20) according to any of claims 1 to 7, or a flanged half-bearing according to claim 8 or 9, or a flanged bush according to claim 10.

12. A method of manufacturing a sliding element (20) or a flanged half-bearing or a flanged bush according to any of the preceding claims, comprising the steps of:-
providing a first sliding element component (21) for supporting a rotatable component;
providing a second sliding element component (22,23) for supporting the rotatable component;
applying a flexible adhesive (31) comprising in a cured state, an elongation at break of between about 100 percent and about 500 percent to the first sliding element component (21) and/or to the second sliding element component (22,23);
bringing the first sliding element (21) and the second sliding element component (22,23) into engagement; and
allowing the flexible adhesive (31) to at least partially cure for a handling time so as to form a self-supporting sliding element (20) or a flanged half-bearing (20) or a flanged bush assembly.

13. A method according to claim 12, wherein the flexible adhesive (31) is applied to the first sliding element component (21) and/or the second sliding element component (22, 23) in the form of at least one elongate bead.

14. A method according to claim 12, wherein the flexible adhesive (31) is applied to the first sliding element component (21) and/or the second sliding element component (22,23) in a series of short runs or spots.

## Patentansprüche

1. Gleitelement (20), umfassend:
eine erste Gleitelementkomponente (21) zum gleitenden Eingreifen in eine drehbare Komponente; und
ein zweite Gleitelementkomponente (22,23) zum gleitenden Eingreifen in die drehbare Komponente;
wobei die erste Gleitelementkomponente (21) mit der zweiten Gleitelementkomponente (22,23) durch einen Klebstoff (31) gekoppelt ist,
**dadurch gekennzeichnet, dass** der Klebstoff (31) ein flexibler Klebstoff ist, der in einem ausgehärteten Zustand eine Reißdehnung von zwischen ungefähr 100 Prozent und ungefähr 500 Prozent umfasst.

2. Gleitelement (20) nach Anspruch 1 zum Tragen einer drehbaren Welle.

3. Gleitelement (20) nach Anspruch 1 oder 2, wobei der flexible Klebstoff (31) ein flexibles Silikon umfasst.

4. Gleitelement (20) nach einem der vorstehenden Ansprüche, wobei der flexible Klebstoff (31) ein flexibles Oximesilikon oder ein flexibles Alkoxysilikon umfasst.

5. Gleitelement (20) nach einem der vorstehenden Ansprüche, wobei der flexible Klebstoff (31) im Wesentlichen auf Temperaturen von mindestens zwischen ungefähr 90 Grad C und ungefähr 150 Grad C beständig ist.

6. Gleitelement (20) nach einem der vorstehenden Ansprüche, wobei die erste Gleitelementkomponente (21) zusätzlich mit der zweiten Gleitelementkomponente (22,23) durch eines oder mehrere mechanische Merkmale gekoppelt ist.

7. Gleitelement (20) nach Anspruch 6, wobei das eine oder die mehreren mechanischen Merkmale mindestens eine Lasche (26,27) an der ersten Gleitelementkomponente zum Eingreifen in mindestens eine entsprechende Kerbe (24,25) an der zweiten Gleitelementkomponente oder umgekehrt umfassen.

8. Angeflanschtes Halblager (20), umfassend ein Gleitelement (20) nach einem der vorstehenden Ansprüche, wobei die erste Gleitelementkomponente (21) ein Halbschalenlager ist, und die zweite Gleitelementkomponente (22,23) mindestens eine Druckscheibe ist.

9. Angeflanschtes Halblager (20) nach Anspruch 8, wobei eines oder beides des Halbschalenlagers (21) und der mindestens einen Druckscheibe (22,23) eine auf Polymer basierende Laufschicht umfasst.

10. Angeflanschte Buchse, umfassend ein Gleitelement (20) nach einem der Ansprüche 1 bis 7.

11. Motor, umfassend ein Gleitelement (20) nach einem der Ansprüche 1 bis 7 oder ein angeflanschtes Halblager nach Anspruch 8 oder 9 oder eine angeflanschte Buchse nach Anspruch 10.

12. Verfahren zum Herstellen eines Gleitelements (20) oder eines angeflanschten Halblagers oder einer angeflanschten Buchse nach einem der vorstehenden Ansprüche, umfassend die Schritte:
Bereitstellen einer ersten Gleitelementkomponente (21) zum Tragen einer drehbaren Komponente;
Bereitstellen einer zweiten Gleitelementkomponente (22,23) zum Tragen der drehbaren Komponente;
Anwenden eines flexiblen Klebstoffs (31), der in einem ausgehärteten Zustand eine Reißdehnung von zwischen ungefähr 100 Prozent und ungefähr 500 Prozent umfasst, an der ersten Gleitelementkomponente (21) und/oder an der zweiten Gleitelementkomponente (22,23);
Bringen des ersten Gleitelements (21) und der zweiten Gleitelementkomponente (22,23) zum Eingreifen; und
Erlauben, dass der flexible Klebstoff (31) mindestens teilweise aushärtet für eine solche Verarbeitungszeit, um ein selbsttragendes Gleitelement (20) oder ein angeflanschtes Halblager (20) oder eine angeflanschte Buchsenanordnung zu bilden.

13. Verfahren nach Anspruch 12, wobei der flexible Klebstoff (31) auf die erste Gleitelementkomponente (21) und/oder die zweite Gleitelementkomponente (22,23) in der Form von mindestens einem länglichen Wulst angewendet wird.

14. Verfahren nach Anspruch 12, wobei der flexible Klebstoff (31) auf die erste Gleitelementkomponente (21) und/oder die zweite Gleitelementkomponente (22,23) in einer Reihe von kurzen Bahnen oder Punkten angewendet wird.

## Revendications

1. Elément coulissant (20) comprenant :
un premier composant d'élément coulissant (21) destiné à venir en prise coulissante avec un composant rotatif ; et
un second composant coulissant (22, 23) destiné à venir en prise coulissante avec le composant rotatif ;
dans lequel le premier composant d'élément coulissant (21) est couplé au second composant d'élément coulissant (22, 23) par un adhésif (31) ;
**caractérisé en ce que**
l'adhésif (31) est un adhésif flexible comprenant, à l'état durci, un allongement à la rupture compris entre environ 100 pour cent et environ 500 pour cent.

2. Elément coulissant (20) selon la revendication 1 pour supporter un arbre rotatif.

3. Elément coulissant (20) selon la revendication 1 ou 2, dans lequel l'adhésif flexible (31) comprend un silicone flexible.

4. Elément coulissant (20) selon l'une quelconque des revendications précédentes, dans lequel l'adhésif flexible (31) comprend un silicone oxime flexible ou un silicone alkoxy flexible.

5. Elément coulissant (20) selon l'une quelconque des revendications précédentes, dans lequel l'adhésif flexible (31) est sensiblement résistant à des températures d'au moins environ 90 degrés C à environ 150 degrés C.

6. Elément coulissant (20) selon l'une quelconque des revendications précédentes, dans lequel le premier composant d'élément coulissant (21) est en outre couplé au second composant d'élément coulissant (22, 23) par une ou plusieurs caractéristiques mécaniques.

7. Elément coulissant (20) selon la revendication 6, dans lequel les unes ou plusieurs caractéristiques mécaniques comprennent au moins une patte (26, 27) sur le premier composant d'élément coulissant pour venir en prise avec au moins une encoche correspondante (24, 25) sur le second élément coulissant élément coulissant, ou vice versa.

8. Demi-palier à rebord (20) comprenant un élément coulissant (20) selon l'une quelconque des revendications précédentes, dans lequel le premier composant d'élément coulissant (21) est un palier à demi-coque et le second composant d'élément coulissant (22, 23) est au moins une rondelle de butée.

9. Demi-palier à rebord (20) selon la revendication 8, dans lequel l'un, ou les deux, du palier à demi-coque (21) et de la au moins une rondelle de butée (22, 23) comprend une couche de roulement à base de polymère.

10. Coussinet à rebord comprenant un élément coulissant (20) selon l'une quelconque des revendications 1 à 7.

11. Moteur comprenant un élément coulissant (20) selon l'une quelconque des revendications 1 à 7, ou un demi-palier à rebord selon la revendication 8 ou 9, ou un coussinet à rebord selon la revendication 10.

12. Procédé de fabrication d'un élément coulissant (20) ou d'un demi-palier à rebord ou d'un coussinet à rebord selon l'une quelconque des revendications précédentes, comprenant les étapes consistant à :
fournir un premier composant d'élément coulissant (21) pour supporter un composant rotatif ;
fournir un second composant d'élément coulissant (22, 23) pour supporter le composant rotatif ;
appliquer un adhésif flexible (31) comprenant, dans un état durci, un allongement à la rupture compris entre environ 100 pour cent et environ 500 pour cent sur le premier composant d'élément coulissant (21) et/ou sur le second composant d'élément coulissant (22, 23) ;
amener le premier élément coulissant (21) et le second composant d'élément coulissant (22,23) en prise ; et
permettre à l'adhésif flexible (31) de durcir au moins partiellement pendant un temps de manipulation afin de former un élément de glissement autoportant (20) ou un demi-palier à rebord (20) ou un ensemble de rebord.

13. Procédé selon la revendication 12, dans lequel l'adhésif flexible (31) est appliqué sur le premier composant d'élément coulissant (21) et/ou le second composant d'élément coulissant (22, 23) sous la forme d'au moins un bourrelet allongé.

14. Procédé selon la revendication 12, dans lequel l'adhésif flexible (31) est appliqué sur le premier composant d'élément coulissant (21) et/ou le second composant d'élément coulissant (22, 23) selon une série de petites courses ou de points.
